# EUROPEAN PATENT APPLICATION

(11) **EP 4 701 047 A1**
(43) Date of publication of application: **25.02.2026**
(21) Application number: 25196760.0
(22) Date of filing: 19.08.2025
(51) Int. Cl.: H02K 1/2798, H02K 15/035, H02K 16/02, H02K 21/24, H02K 15/12

(54) **AXIAL FLUX MACHINE ROTOR**

(30) Priority: 19.08.2024 GB 202412207
(71) Applicant: Evolito Ltd, Bicester, Oxford Oxfordshire OX25 2PA (GB)
(72) Inventor: BROWN, Dominic, Bampton, OX18 2DH (GB)
(74) Representative: Marks & Clerk LLP

(57) **Abstract**

A rotor for an axial flux machine, where the rotor is formed of a disc shaped rotor body, a magnetic sub-assembly and an inner ring structure. The magnetic sub-assembly comprises a plurality of permanent magnets, a compression ring structure and a support ring structure. The magnetic sub-assembly is bonded to a first face of the disc shaped rotor body, and the inner ring structure bonded to a support ring structure of the magnetic sub-assembly. The compression ring structure provides a radially inward force that acts in opposition to the centripetal force exerted on the permanent magnets when the rotor is spinning. The support ring structure reacts the compressive loads of the compression ring structure, in particular when the rotor is at rest or non-operation, which is when the compressive forces on the permanent magnets are at their greatest.

## Description

### Technical Field

The present disclosure relates to rotor bodies, rotors, rotor assemblies and axial flux machines.

### Background

The move away from internal combustion engines to more electric machines, though initially focussed on automotive applications for land-based vehicles, is now finding a new focus in the demanding applications of aerospace. Because lifting mass is costly, research effort is turning to maximise efficiencies, torque, speed and reducing mass of electric machines for aerospace applications where highest power density coupled with reliability are well understood pre-requisites in this industry.

For many years radial flux motors / generators dominated aerospace electric machines, despite the invention of a different, axial flux topology. Several reasons can be attributed to the slow rise of axial flux machines, still in their infancy in aerospace, not least difficulty in displacing incumbent, known reliability technologies, but also not helped by challenges in efficient and consistent techniques for production. Axial flux electric machines present considerable challenges in manufacture and yet arguably, provide the best power dense topology for many aerospace drive, lift and generator applications, operating at speeds and torques that suit turbine, prop, and blade, drive sources. Advances continue to be made in axial flux topology, particularly improving power density and manufacturing techniques.

An axial flux permanent magnet machine typically has disc- or ring-shaped rotor and stator structures arranged about an axis. The stator comprises a set of coils each of which may be parallel to the axis. The rotor bears a set of permanent magnets and is mounted on a bearing so that it can rotate about the axis driven by fields from the stator coils.

Rotor stages typically comprise a hub region and an annular ring, the annular ring being of soft magnetic material and used to convey magnetic flux between adjacent magnets, the magnets being surface mounted and spaced circumferentially around the rotor stage annular ring and disposed axially, i.e., parallel the rotation axis of the rotor. High rotational rotor speeds generate high centripetal force on rotor stages particularly on surface mounted magnets and loss of magnet adhesion is a risk for this motor topology. It is possible for the annulus and hub regions to be continuous, made of the same material and is typically a ferromagnetic steel 'backplane', however ferromagnetic steel is conductive and eddy current losses are generated during use. To reduce eddy currents, it is possible for the annular ring to hold a soft magnetic material, the soft magnetic material being soft magnetic powder composite or laminated electrical steel, the soft magnetic material being substantially capable of carrying magnetic flux between adjacent surface mounted magnets, but suppresses current flow in this same plane, it being of high electrical resistance in a plane substantially radial to the motor axis. The term high electrical resistance here is used to in the context of the inability of an electrical current to cross layers of steel laminate which are separated by layers of insulating material to segment the conductive material into smaller sections. In the case of powdered materials, these may be coated in an insulating material such as glass for the same reason. Though bringing advantages of stiffness and eddy current reduction, backplanes add mass to rotors and reduce power density of these electric machines.

A topology not requiring rotor backplanes are double stator single rotor axial flux motors wherein said single rotor contains magnets disposed circumferentially with pole faces, facing across air gaps to stator electromagnetic coils similarly disposed. Double stator machines preferably have rotors comprising a non-magnetic matrix, the matrix having embedded magnets disposed circumferentially, the magnets having their pole faces aligned predominantly parallel the axis of rotation, the magnetic north and south-pole faces facing across air gaps towards the stators. Such rotors are usually axially and radially mass symmetric.

Double stator, single rotor axial flux machines benefit from substantially equal magnetic forces applied when at rest, and when in use, as the rotor acts cooperatively with both stators and the magnetic field induced axial forces on the rotor are substantially balanced. Double stator, single rotor machines do not need a rotor magnetic yoke to carry permanent magnets, hence saving of yoke weight, and because axial forces are substantially balanced a rotor for such a machine can be of comparatively low stiffness. However, these advantages come at the cost of two stators and their back yokes, which when assembled are typically of greater mass and axial length than single stator, double rotor axial flux machines. US2009072639A1 teaches Fig 6, a double stator single rotor topology, with a rotor enhanced for high-speed operation using a carbon fibre tow wrapped around the rotor periphery to contain magnets against substantial centrifugal forces. But despite increase in power output through rotor speed, this does not counter additional mass accompanying double stators and increased machine length, and highest power density is not usually sought from this axial machine topology.

However, to obtain a short axial length for a double rotor single stator axial machine, the rotor construction needs to achieve stiffness and integrity at rest and under load.

There is advantage in motors of the present invention in maximising torque generated by antagonistic magnetomotive force between stator and rotor by minimising air gaps between stator and rotor consistent with stiffness of said rotor stages and stack tolerances of pertinent components. With minimised stator to rotor air gap there is potential for significant axial load between the rotor stage and motor stator at rest and during operation and it is preferable for the rotor to be stiff so as to resist bending which might otherwise interfere with the stator. Specifically, the magnetic load is greatest when the motor is off, the stator repulses the rotors hence the load drops on the rotor magnets when the motor is on and this further decreases as the speed increases.

A problem to be solved by the present invention is to achieve sufficient stiffness of the rotor stage so as to minimise movement towards said stator, whilst minimising the rotor stage mass, minimising eddy currents and maximising magnetic flux carrying capacity. Another problem for motors of the present invention is to maintain integrity of rotor stages that in the course of normal operation are caused to rotate at high rotational speed, which speed induces large centripetal forces on magnets and so stresses attachment between surface mounted magnets and said annular ring to which they are fixed.

Another problem to be solved by the present invention is that whereas symmetric machines, e.g., double stator single rotor axial flux and radial flux machine, rotors are usually mass balanced around a rotating axis, in contrast, for a double rotor single stator axial flux topology, the rotors are usually mass asymmetric along their rotation axis. Such axial mass asymmetry leads to bending moments caused by magnets being offset from the rotor's centre of mass and as speed increases rotors will concave or convex dish away from the stator providing a route for magnets to peel away from their mounting surface. The direction of dishing depends on the position of the centre of mass of the rotor.

Axial flux motors initially developed for automotive, instead of aerospace, applications are typically designed with cost and scalability of manufacture in mind and the problem of rotor mass has been overridden by the benefits of reliable mass production. However, rotor mass plays a significant role in the dynamic movement of the rotor over its operating range and a further problem to be solved for motors of the present invention is improved control of the axial movement of the rotor leading to improved motor performance and efficiency.

A further problem to be solved for motors of the present invention is rotors can have resonance frequencies coinciding with commonly used speeds of operation and there is value in tuning resonance whilst maintaining other characteristics.

Another problem to be solved for motors of the present invention is maintaining the temperature of permanent rare-earth transition-metal magnets commonly used to 130°C or thereabouts, that is to say at a peak temperature well below their curie temperature. Eddy currents generate heat in permanent magnets during a motor's operation and magnets may be laminated to reduce eddy currents, however, making laminations results in a loss of total useful magnetic material present and is costly. The number of laminations are accordingly limited by a cost / benefit balance. Too many laminations reduces the packing factor of the magnets (i.e. the ratio of magnet mass to insulation/adhesive mass). As a result, eddy currents though reduced, still generate heat in permanent magnets.

It is an object of the invention to provide a rotor in which at least some of the disadvantages associated with known rotor designs are overcome or are of reduced effect.

GB2468018 proposes an electric machine comprising a permanent magnet rotor and a stator having coils wound on stator bars.

US2009072639 proposes a composite rotor for an axial air-gap, permanent magnet dynamoelectric machine.

Our previous application GB2627184 proposes a solution in which a rotor comprising a Sheet Moulding Composite (SMC) rotor body has mounted thereto a plurality of permanent magnets arranged in a Halbach configuration. The permanent magnets are surrounded on their radially outward surface by a ring that provides a compressive force to help retain the magnets in place when the rotor is spinning. To react these inwardly compressive forces, and to reduce the stress produced on the bond between the magnets, a first ring having u-shaped corrugations is provided. However, it has been found that u-shaped first ring is prone to distortion and causing warping of the magnetic array due to the compressive forces acting on the radially outward surface of the magnets.

We have therefore appreciated the need for a new rotor for an axial flux machine.

### Summary

Broadly speaking, the rotor according to the present invention is formed of a disc shaped rotor body, a magnetic sub-assembly and an inner ring structure. The magnetic sub-assembly comprises a plurality of permanent magnets, a compression ring structure and a support ring structure. The support ring structure of the magnetic sub-assembly is bonded to the inner ring structure, and the magnetic sub-assembly and inner ring structure are bonded to the first face of the disc shaped rotor body. The compression ring structure provides a radially inward force that acts in opposition to the centripetal force exerted on the permanent magnets when the rotor is spinning. The support ring structure reacts the compressive loads of the compression ring structure, in particular when the rotor is at rest or non-operation, which is when the compressive forces on the permanent magnets are at their greatest.

The present invention provides a rotor, axial flux machine comprising said rotor, and a method of assembling said rotor in accordance with the appended independent claims. Further advantageous embodiments are also provided by the appended dependent claims.

In particular, we describe a rotor for an axial flux machine, the rotor comprising: a disc-shaped rotor body having an axis of rotation, and a first face extending perpendicular to the axis of rotation, the first face having an opening at the axis of rotation; a magnetic sub-assembly bonded to the first face of the disc-shaped rotor body, the magnetic sub-assembly comprising: a plurality of permanent magnets disposed circumferentially around the axis of rotation, the plurality of permanent magnets arranged in a Halbach array configuration; a compression ring structure configured to compress a radially outward surface of the plurality of permanent magnets; and a support ring structure bonded to a radially inner surface of the plurality of permanent magnets, the support ring structure being configured to react the compressive force of the compression ring; and an inner ring structure bonded to the support ring structure.

Advantageously, the support ring structure reacts the compressive loads of the compression ring structure, in particular when the rotor is at rest or non-operation. This provides a magnetic sub-assembly that is less prone to warping or coning during manufacture, and also enables the compressive forces of the compression ring structure to provide sufficient compressive forces to counteract the centripetal forces imparted on the rotor when rotating.

The support ring structure may have a profile that is symmetric about a plane that is perpendicular to the axis of rotation of the rotor body. Such an arrangement reduces the compressive forces imparted on the permanent magnets causing them to warping or coning when installed on the permanent magnets. The support ring structure may be formed of a poorly electrically conducting and non-magnetic metal or alloy or ceramic. The metal may be titanium or a titanium alloy. The support ring structure may be bonded to the inner axial surface of the plurality of magnets with an adhesive bond layer.

The compression ring structure may be formed of a fibre reinforced composite material. The compression ring structure may be a pre-stretched ring structure that provides a compressive force to the radially outer surface of the permanent magnets.

The inner ring structure may be mounted to the first face of the rotor body in one of a plurality of positions relative to the first face of the rotor body, and is configured to be moveable to another of the plurality of positions to control a centre of mass of the rotor. The inner ring structure may be mounted to the first face of the rotor body in said one of a plurality of positions with one or more of: studs, spacers, nuts, and bolts.

Alternatively, the inner ring structure may be formed as part of the rotor body.

A surface of the inner ring structure may be provided with a plurality of corrugation structures. One function of these structures is to enable tuning or optimising of the rotor axial deflection behaviour as a function of speed and axial magnetic loading from the stator.

The magnetic sub-assembly may be mounted to the first face of the rotor body by an adhesive bond.

The rotor body may be formed of a non-metallic and non-magnetic material, for example the rotor body may be formed of a fibre composite material, Sheet Moulding Compound (SMC), engineering-grade polymer, Polyetheretherketone (PEEK) polymer, or ceramic.

We also describe an axial flux machine, comprising: a stator comprising a plurality of stator bars disposed circumferentially at intervals around an axis of the axial flux machine, each of the stator bars having a set of windings wound therearound to form a stator coil stack for generating a magnetic field generally parallel to the axis of the axial flux machine, the plurality of stator coil stacks being arranged to provide a hollow region at the centre of the axis of the axial flux machine; and a rotor as described above, the rotor being spaced apart from the stator along the axis of the machine to define a gap between the stator and rotor.

We also describe an axial flux machine further comprising: a second rotor in a form as described above, the second rotor on a side of the stator opposing the side of the first rotor, and the second rotor being spaced apart from the stator along the axis of the machine to define a bap between the stator and rotor.

We further describe a method of assembling a rotor of an axial flux machine, the method comprising: providing a disc-shaped rotor body, the rotor body having an axis of rotation, and a first face extending perpendicular to the axis of rotation, the first face having an opening at the axis of rotation; providing a magnetic sub-assembly, the magnetic sub-assembly comprising: a plurality of permanent magnets disposed circumferentially around the axis of rotation, the plurality of permanent magnets arranged in a Halbach array configuration; a compression ring structure arranged radially outward of the plurality of permanent magnets and configured to compress a radially outward surface of the plurality of permanent magnets; and a support ring structure arranged radially inwardly of the plurality of permanent magnets, the support ring structure being configured to react the compressive force of the compression ring; bonding an inner ring structure to the support ring structure of the magnetic sub-assembly; and bonding the magnetic sub-assembly to the first face of the rotor body.

Providing a magnetic sub-assembly may comprise: arranging a plurality of permanent magnets in a Halbach array configuration arranged circumferentially around an axis; bonding the support ring structure to the radially inner surface of the plurality of permanent magnets; and applying the compression ring structure to the radially outward surface of the plurality of permanent magnets. Arranging a plurality of permanent magnets may comprise arranging the plurality of permanent magnets in a jig.

Arranging a plurality of permanent magnets may comprise bonding the permanent magnets in the Halbach array configuration.

Bonding the support ring structure to the radially inner surface of the plurality of permanent magnets may comprise arranging the support ring structure radially inwardly of the plurality of permanent magnets and applying an adhesive bond between the support ring structure and the radially inward surface of the plurality of permanent magnets. The support ring structure may be formed of a poorly electrically conducting and non-magnetic metal or alloy or ceramic. The metal may be titanium or a titanium alloy.

The compression ring structure may be a pre-stretched ring structure that provides a compressive force to the radially outer surface of the permanent magnets, and applying the compression ring structure comprises pre-stretching the compression ring structure prior to applying the compression ring structure to the radially outward surface of the plurality of permanent magnets. The compression ring structure may be formed of a fibre reinforced composite material.

The inner ring structure may mounted to the first face of the rotor body in one of a plurality of positions relative to the first face of the rotor body, and is configured to be moveable to another of the plurality of positions to control a centre of mass of the rotor. The inner ring structure may be mounted to the first face of the rotor body in said one of a plurality of positions with one or more of: studs, spacers, nuts, and bolts.

Alternatively, the inner ring structure is formed as part of the rotor body.

The magnetic sub-assembly may bonded to the first face of the rotor body by an adhesive bond.

The rotor body may be formed of a non-metallic and non-magnetic material, for example, the rotor body is formed of a fibre composite material, Sheet Moulding Compound (SMC), engineering-grade polymer, Polyetheretherketone (PEEK) polymer, or ceramic.

As discussed above, the support ring structure is provided around an inside surface of the rotor's magnets to structurally support the magnets against radially inwards, compressive forces whereas the compression ring structure is provided around the outer surface of the rotor's magnets to compress the magnets inwards against the support provided by the first ring structure in order to reduce the load on the bond which secures the magnets to the rotor body. Not only does this opposing, two-ring structure pre-stress the rotor's magnets but each ring acts at least partially as physical blocking barrier or shield in the event of a catastrophic failure where a rapid break apart of the rotor results in shrapnel that could damage or destroy other parts of the aerospace vehicle into which the rotor is incorporated.

Advantageously, whilst the rotor body is formed of a non-metal and non-magnetic material, the material may be chosen light-weighting and eddy current reduction purposes. Keeping the support ring structure as a metal such as titanium or a titanium alloy (or other poorly electrically conducting and non-magnetic metal or alloy that provides mechanical and structural strength) harnesses the mechanical strength of such metals and alloys to enhance the ability of the support ring structure to resist the compressive force applied by the compression ring structure to the magnets of the rotor. Advantageously, corrugation structures on the inner ring structure, for example, peaks and valleys on an axially facing surface of the first ring structure provide the effect of reducing eddy current losses in the metal of the first ring structure. However, the inventors have found that these structures also have a surprisingly provide the benefit of increasing stiffness of the first ring structure, and, as it is secured to the rotor body, also the stiffness of the rotor body and thus of the rotor as a whole. This prevents undesirable dishing of the rotor when it is rotating at high speeds.

Advantageously, as described above, the compression ring structure provides a compressive force acting radially inwards on the radially outer surface of the magnets in the direction of the first ring structure. As described above, a purpose of the compression ring structure is to reduce the load on the bond by which the magnets are secured to the rotor body by counteracting the rotational forces which result in a load in a direction away from the axis of rotation when the rotor is rotating at high speeds. Accordingly, the compression ring structure surrounds the magnets at compresses them radially inwards to counter those rotational forces. Unlike the support ring structure where metal provides a synergistic advantage as described above, the second ring structure may be light-weighted and formed of a fibre reinforced composite material.

Advantageously, as the maximum operationally safe rotational speeds of the rotor (and thus the likely max forces the magnets will be subjected to) are known from the design rotor, the compression ring structure can be pre-stretched during manufacture of the ring such that when it is applied to the magnets, the compression it applies to the magnets is equal to centripetal forces at peak operating speeds so that the forces during peak operating speeds are close to being exactly balanced and the risk of these forces causing the bond by which the magnets are secured to the rotor body to weaken is reduced, thereby providing a further layer of safety redundancy. Whilst this does result in a compressive load on the magnets during rest/non-operation of the rotor, this is countered by the support ring structure and by the bonding adhesive used to secure the magnets to the rotor body and by the bonding layer between the radially inside surface of the magnet and the support ring structure.

### Brief Description of the Drawings

These and other aspects of the invention will now be further described, by way of example only, with reference to the accompanying figures, in which:
Figure 1 illustrates an example known yokeless and segmented armature (YASA) machine.
Figure 2 illustrates an example known yokeless and segmented armature (YASA) machine.
Figure 3a illustratively shows a rear view of a rotor body.
Figure 3b illustratively shows a front view of the first surface of the rotor body of figure 3a.
Figure 4 illustratively shows a view of a magnetic sub-assembly.
Figure 5a illustratively shows a view of a rotor according to the present disclosure.
Figure 5b illustratively shows a view of a portion of the rotor of Figure 5a.
Figure 5c illustratively shows a view of a portion of the rotor of Figure 5a.
Figure 5d illustratively shows a view of a portion of the rotor of Figure 5a.
Figure 5e illustratively shows a view of a portion of the rotor of Figure 5a.
Figure 6 illustratively shows a view of an axial flux machine according to the present disclosure.

### Detailed Description

We will first discuss more broadly the configuration of axial flux machines.

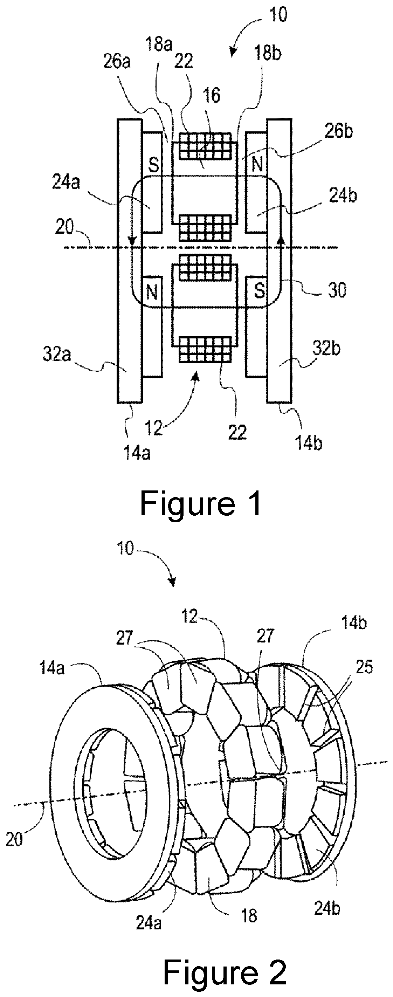

Figures 1 and 2 are taken from WO2012/022974, and show details of an example known yokeless and segmented armature (YASA) machine 10. The machine 10 may function either as a motor or as a generator.

The machine 10 comprises a stator 12 and, in this example, two rotors 14a,b. The stator 12 comprises a collection of separate stator bars 16 spaced circumferentially about a machine axis 20, which also defines an axis of the rotors 14a,b. Each bar 16 carries a stator coil 22, and has an axis which is typically disposed parallel to the rotation axis 20. Each end 18a,b of the stator bar is provided with a shoe 27, which helps to confine coils of the stator coil 22 and may also spread the magnetic field generated by the stator coil. The stator coil 22 may be formed from square or rectangular section insulated wire so that a high fill factor can be achieved. In a motor the stator coils 22 are connected to an electrical circuit (not shown) that energizes the coils so that poles of the magnetic fields generated by currents flowing in the stator coils are opposite in adjacent stator coils 22.

The two rotors 14a,b carry permanent magnets 24a,b that face one another with the stator coil 22 between. When the stator bars are inclined (not as shown) the magnets are likewise inclined. Gaps 26a,b are present between respective shoe and magnet pairs 17/24a, 27/24b. In an example motor the stator coils 22 are energized so that their polarity alternates to cause coils at different times to align with different magnet pairs, resulting in torque being applied between the rotor and the stator. In Figures 1 and 2 the structural strength of the stator housing is achieved by providing a suitably thick layer of polymer, for example greater than 10mm and bolting the polymer to an outer housing.

The rotors 14a,b are generally connected together, for example by a shaft or "hub" (not shown), and rotate together about the machine axis 20 relative to the stator 12. In the illustrated example a magnetic circuit 30 is formed by two adjacent stator bars 16, two magnet pairs 24a,b, and two back plates 32a,b, one for each rotor, linking the flux between the backs of each magnet pair 24a,b facing away from the respective coils 22. The back plates 32a,b of WO2012/022974 in may be referred to as rotor bodies or back-irons and, in the known examples of Figures 1 and 2 comprise a metal, magnetic material, typically a ferromagnetic material, which has a high mass and is thus not suitable for aerospace use. The stator coils 16 are enclosed within a housing which defines a chamber for the rotors and stator, and which may be supplied with a cooling medium.

Broadly speaking, the rotor according to the present invention is formed of a disc shaped rotor body, a magnetic sub-assembly and an inner ring structure. The magnetic sub-assembly comprises a plurality of permanent magnets, a compression ring structure and a support ring structure. The support ring structure of the magnetic sub-assembly is bonded to the inner ring structure, and the magnetic sub-assembly and inner ring structure are bonded to the first face of the disc shaped rotor body. The compression ring structure provides a radially inward force that acts in opposition to the centripetal force exerted on the permanent magnets when the rotor is spinning. The support ring structure reacts the compressive loads of the compression ring structure, in particular when the rotor is at rest or non-operation, which is when the compressive forces on the permanent magnets are at their greatest.

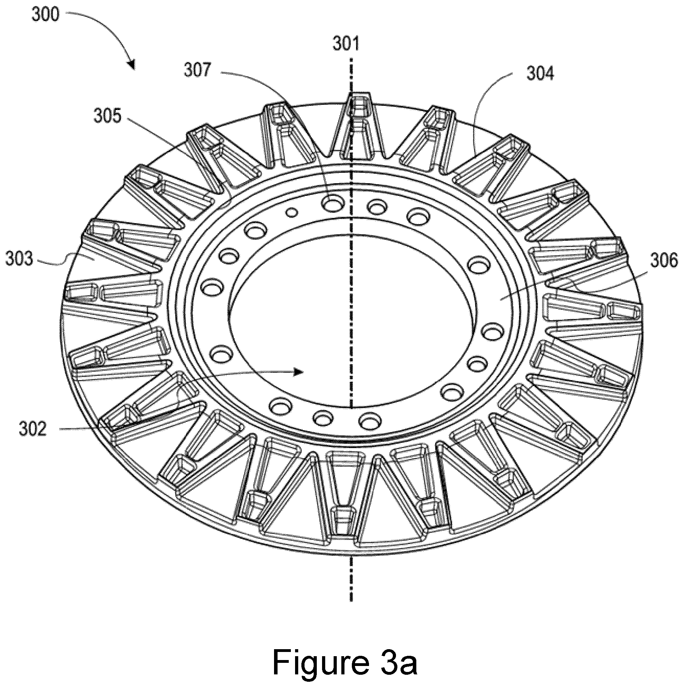

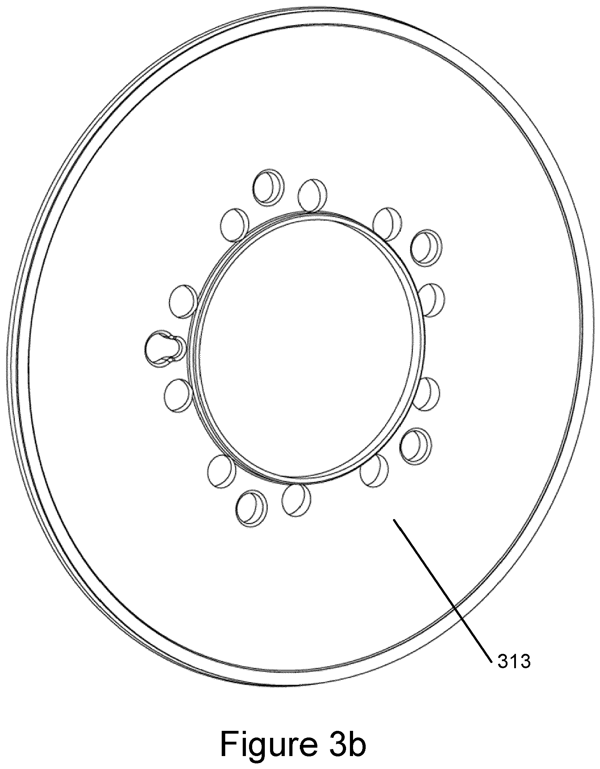

Figures 3a and 3b illustratively show a rotor body 300. The rotor body 300 comprises a disc formed of a non-metallic and non-magnetic material. This may, for example, be a fibre reinforced composite material such as Sheet Moulding Compound (SMC), or it may be an engineering-grade polymer such as Polyetheretherketone (PEEK), or other materials such as a ceramic. The rotor body 300 comprises an opening 302 at the axis of rotation 301 of the disc. The term axis of rotation means the axis about which the rotor would rotate when used in an axial flux machine. The rotor body 300 has two faces: a first face 313 (not visible in Figure 3a but visible in Figure 3b) onto which a plurality of permanent magnets are intended to be mounted, and a second face 303 on an opposite side of the rotor body 300 to the first face.

A plurality of support ribs 304 may be provided on the second face 303. The support ribs 304 are not essential to the invention and the rotor may be provided without them, however, when provided, the support ribs 304 extend in a direction generally towards the axis of rotation across a portion. This need not be exactly to the axis but may be in the general direction thereof. However, it is envisaged that the ribs 304 may in other examples point exactly at the axis of rotations. The ribs may extend entirely, or partially across the face of the rotor body 300 and may start at the radially outer edge or at distance therefrom and may end at or beyond a radially inside edge of the face, or a distance therefrom. In the example of Figure 3a, the support ribs 304 "zig-zag" across the second face 303, extending radially inwards to a first radius which is not at the radially inside edge of the rotor body 300. The radially inwards extent of the support ribs 304 in this example is approximately up to halfway towards the radially inside edge of the rotor body 300. The plurality of support ribs 304 have the further effect of generating turbulence in the surrounding air (or if applicable fluid) as the rotor body rotates during operation. This turbulence advantageously helps to cool the rotor body as it encourages the movement hot air close to the rotor body (where heat may be generated in the magnets and metal inner ring through eddy currents) away from the rotor and towards the stator, which may be oil cooled and thus better at dissipating heat away from the rotor assembly than the rotor is. The hot air may be replaced with fresh cool air and thus helps to keep the rotor cool.

A raised ring support structure 305 may also provided on the second face, joined to the support ribs 304. Radially inside of the raised ring support structure 305 at least a portion of the second face 303 may comprise a recessed portion 306.

The second face 303 is also provided with a plurality of bolt holes 307 configured to receive bolts and used to secure a support hub of a rotor assembly to the rotor body 300, and/or to secure other components to the rotor body 300 such as a ring structure as will be described in more detail below.

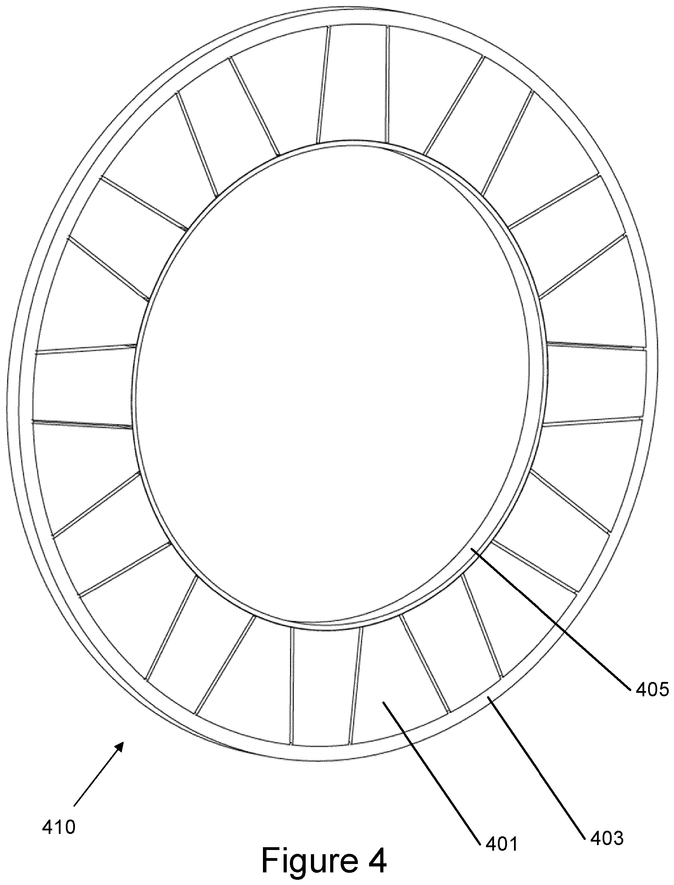

Figure 4 shows the magnetic sub-assembly. Broadly speaking, the magnetic sub-assembly 410 is formed of the plurality of permanent magnets 401, the support ring structure 405 and the compression ring structure 403.

The compression ring structure 403 is mounted on the radially outward surface of the permanent magnets 401 and its purpose is to provide a compressive radially inward force onto the radially outward surface of the plurality of magnets, that is, the surface of the plurality of magnets 401 furthest from the axis of rotation 301. This provides a radially inward force that acts in opposition to the centripetal force exerted on the permanent magnets when the rotor is spinning.

The compression ring structure 403 is preferably formed of a fibre reinforced composite material, for example a carbon fibre composite material. The compression ring structure 403 is pre-stretched so that when it is mounted around the magnets 401, the compression it applies to the magnets 401 is approximately equal to centripetal forces of the rotor rotating at peak operating speeds. As a result, the outwardly directed forces during peak operating speeds are close to being exactly balanced by the inwards forces applied by the compression ring structure 403 so the risk of these forces causing the bond by which the magnetic sub-assembly 410 are secured to the rotor body 300 to weaken is reduced, thereby providing a further layer of safety redundancy. Whilst this does result in a compressive load on the magnets 401 during rest/non-operation of the rotor, this is countered at least by the support ring structure 405.

An alternative approach regarding the compression ring structure 403 is instead to use a Direct Filament Placing (DFP) technique in which the fibres comprising the structure of the composite material are directly wound around the radial outer surface of the permanent magnets 401 at the required tension to apply the desired compressive force to the magnets.

The support ring structure 405 is bonded to a radially inner surface of the permanent magnets 401 prior to application of the compression ring structure 403, and its purpose is to react the radially inward compressive force applied to the permanent magnets 401 by the compression ring structure 403.

The support ring structure 405 is formed of a material having a relatively high compressive strength, and a relatively low electrical conductivity. Some example materials may include a metal such as titanium or a titanium alloy, or other poorly electrically conducting and non-magnetic metal or alloy that provides the required mechanical and structural strength. Other materials include ceramics, composites or polymers. The support ring structure 405 is bonded to the inner radial surface of the permanent magnets 401, that is the surface of the plurality of magnets 401 closest to the axis of rotation 301. In practice, a gap is formed between the support ring structure 405 and the radially inner surface of the permanent magnets 401 which is filled with a bonding adhesive. Forming the magnetic sub-assembly this way thus enables manufacturing tolerances between the support ring structure 405 and permanent magnets 401 to be accommodated.

As mentioned above, the function of the support ring 405 is to react the compressive loads of the compression ring structure 403, in particular when the rotor is at rest or non-operation. The material chosen for the support ring 405 is based on the required material properties to react the compressive loads applied by the compression ring 403 during this non-operating / rest condition i.e. when the loads are at their greatest.

The support ring structure 405 preferably has a profile that is symmetric about a plane that is perpendicular to the axis of rotation 301 of the rotor body. Having a support ring structure 405 with a symmetric profile means that when the compression ring structure 403 is applied to the radially outer surface of the permanent magnets 401, the magnetic sub-assembly 410 is less likely to experience deflecting or warping under the compressive loads. It has been found that magnetic sub-assemblies with support ring structures having non- or asymmetric profiles are more prone to warping or deflecting under compressive loads.

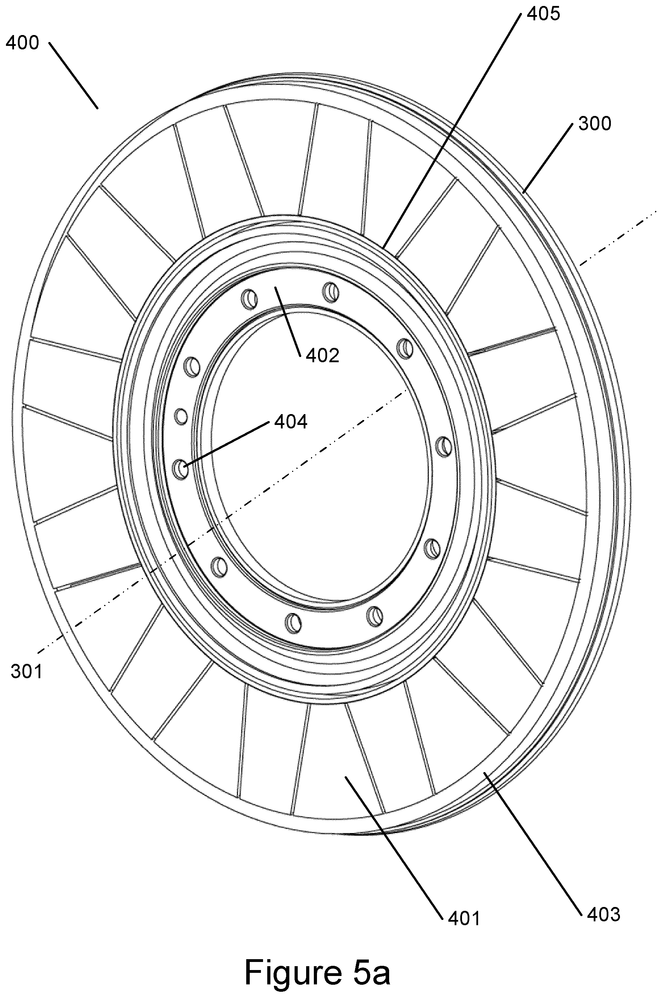

Figure 5a illustratively shows a view of rotor 400 according to the present disclosure for an axial flux machine. The rotor comprises the rotor body 300 of Figures 3a and 3b, magnet sub-assembly 410 of Figure 4, and an inner ring structure 402. As discussed above, the magnetic sub-assembly 410 is formed of a plurality of permanent magnets 401, a support ring structure 405 and a compression ring structure 403. The magnetic sub-assembly 410 is mounted to the first face 313 of the rotor body 300 with an adhesive bond. The plurality of magnets 401 are arranged in a Halbach array configuration. The specifics to the Halbach arrangement are not important to the structure of the rotor and the arrangement is chosen based on the desired magnetic characteristics of the rotor.

Since the rotor body is formed of a non-metallic and non-magnetic material that replaces the usual metal back-iron of magnetic steel, a synergistic effect arises in that it is possible to replace typical north-south magnet array used in known axial flux machines with a more magnetically efficient Halbach array. A Halbach magnet array provides alternating north and south poles in a clockwise format, each 'working' pole, i.e., magnetic pole with corresponding stator armature, facing substantially in an axial direction and each opposing pole i.e., magnet poles facing substantially away from the stator (not shown) being turned by way of the Halbach array format towards the neighbouring pole face. This use of Halbach arrays removes the need for a magnetic return path that is usually provided by a steel or other metal back-iron. Whilst more magnetic material is required to complete a Halbach array (there being no magnets separated by free space but instead a continuous ring of magnets arranged to deflect 'un-opposed' poles towards neighbouring magnets), the substantial mass reduction and magnetic efficiency gains the synergistic use of a non-metallic and non-magnetic rotor body and Halbach array provide makes the slight increase in mass from more magnetic material a worthwhile trade off. Specifically, the increase in magnet mass is less than the reduction in rotor mass through not requiring a metal back-iron return path.

The inner ring structure 402 may be formed of the same material as the support ring structure 405, that is it may be formed of a material having a high compressive strength, and a low electrical conductivity. Some example materials may for example comprise a metal such as titanium or a titanium alloy, or other poorly electrically conducting and non-magnetic metal or alloy, or polymers or ceramics. However, the inner ring structure 402 need not be of the same material as the support ring structure 405. Since the compressive loads on the magnets are reacted by the support ring structure 405, the inner ring structure 402 is not necessary to react the compressive loads of the compression ring structure 403. As such, the inner ring structure 402 does not need to have the same material strength as the support ring structure 405. The inner ring structure 402 may instead be formed of the same material of the rotor body 300. Or alternatively, the inner ring structure 402 may be formed of a completely different material.

The inner ring structure 402 is bonded to the support ring structure 405 via, for example, adhesives, and is mounted to the first face 313 of the rotor body 300 in one of a plurality of positions relative to the first face. Specifically, the exact position of the inner ring structure 402 relative to the rotor body 300 in the direction of the axis of rotation 301 may be adjusted when the rotor is being calibrated so that the centre of mass of the rotor can be controlled. For example, the inner ring structure 402 may be secured to the rotor body 300 using one or more nuts and bolts and the relative position changed be including spacers between the rotor body 300 and the inner ring structure 402. The inner ring structure 402 is accordingly provided with one or more openings through which bolts or other securing means may be inserted. These openings 404 match the position of the corresponding openings 307 on the rotor body 300.

In an alternative, the inner ring structure 402 may be part of the rotor body 300 itself instead of a separate component. However, in instances where the inner ring structure 402 is a separate component from the rotor body, this allows for different materials to be chosen depending on the use.

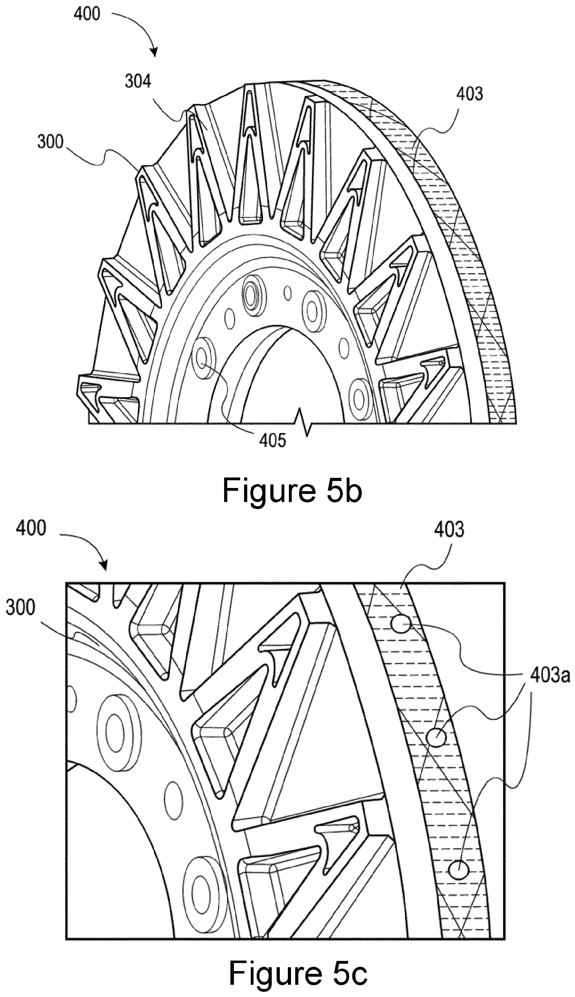

Figure 5b illustratively shows an alternative view of a portion of the rotor 400 of Figure 5a, specifically showing the opposite side thereof. In Figure 5b, the ribs 304 of the rotor body are visible, as well as a radially outside surface of the compression ring structure 403, and the nuts and bolts used to secure the inner ring structure 402 to the rotor body 300.

Figure 5c illustratively shows a zoomed in view of the rotor 400 of Figure 5a, specifically showing a radially outer surface of a portion of the circumference of the compression ring structure 403. The surface comprises a plurality of recessed portions 403a that may extend partially or fully through the compression ring structure 403, in which case they are holes through the compression ring structure 403. As the rotor rotates during operation, the outer circumference of the compression ring structure 403 typically has a linear speed of around 20-30m/s which means even small disruptions in the exposed surfaces of the compression ring structure 403 may result in a substantial amount of turbulence being generated in the surrounding air. This turbulence advantageously encourages air movement around the space in which the rotor 400 is housed and thus encourages air that has been heated by the operating rotor 400 to be replaced by cooler air from elsewhere in the space around the rotor 400, thereby helping to keep the rotor cooler than had there been no turbulent airflow. Recessed portions e.g. dips or holes are relatively easy to machine into the compression ring structure 403 so this facilitates an efficient and easy manufacturing process. Whilst not shown in Figure 5c, it is envisaged that raised portions may additionally or alternatively be provided. The recessed and/or raised portions may have any shape, for example, circular, square, diamond, serpentine (i.e. 'S') shapes and others, and they may extend for a portion around the surface to further enhance their effectiveness at generating turbulence in the surrounding air. The recessed and/or raised portions are not essential to the operation of the rotor, but provide an advantageous cooling effect.

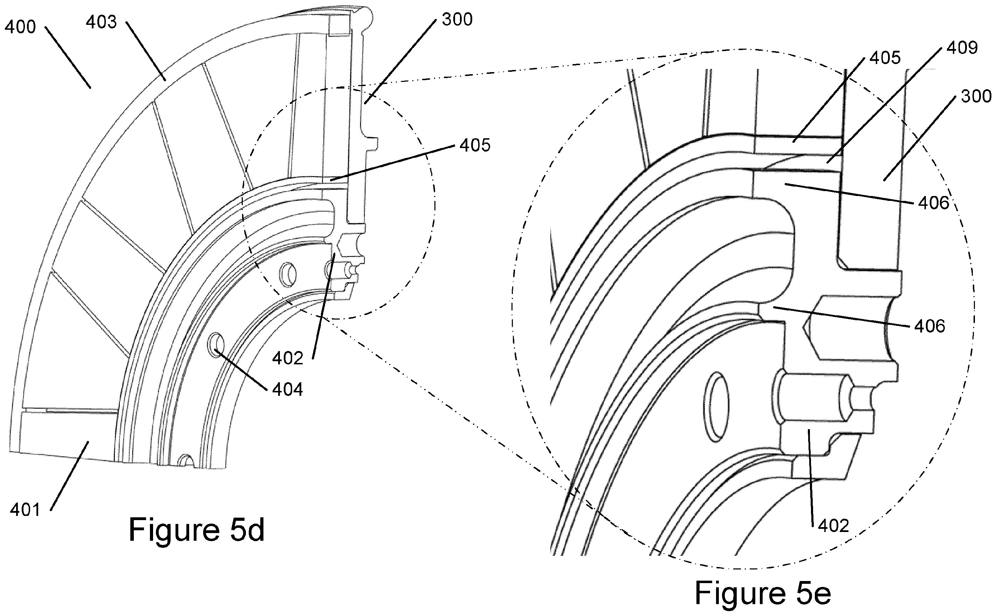

Figure 5d illustratively shows a slice through view of a portion of the rotor 400 of Figure 5a. Visible in Figure 5d is that the inner ring structure 402 is provided with corrugations 406 that form one or more U-shaped channels. As described above, these are intended to reduce undesirable eddy currents in the inner ring structure 406 but unexpectedly result in an increased stiffness in the rotor body 300 and thus an overall increased stiffness of the whole rotor 400. The corrugations comprise alternative raised and recessed portions in a surface of the inner ring structure 402. It has been found that the design of the corrugations 406 enable tuning or optimising of the rotor axial deflection behaviour as a function of speed and axial magnetic loading from the stator. When installed in the machine, the rotor is subjected to a continuous axial magnetic attractive force towards the stator, causing it to deflect ("cone") towards the stator. The nominal air gap is generally in the region of only about 1 mm and its size has a strong influence on motor performance. As such, good control over this air gap is an important requirement for all axial flux motors. Conversely however, when the rotor speed is increased, the centripetal force generated predominantly by the permanent magnets 401 causes the rotor to deflect or cone the other way i.e. away from the stator. The deflection increases with speed. The rotor designer has to balance these two conflicting deflection forces whilst also attempting to minimise rotor mass. The corrugations or U-channels 406 provides a means of doing this, since their geometry can be carefully adjusted during the design process to yield differing amounts of coning/deflection under the magnetic and centripetal forces. As such, this feature allows for precise air gap control through adjustment of specific dimensions of the inner ring structure 402 during the design process.

As discussed above, the inner ring structure 402 and rotor body 300 may be separate components. This enables dissimilar materials and manufacturing methods to be used for each. For example, the rotor body 300 may be made from a lightweight material such as composite that can be formed into a simple, stiff disc (possibly with stiffening ribs), whilst allowing the inner ring structure 402 to be machined from a metal, which may be better suited to its complex geometry including bolt holes and the corrugations 406. Furthermore, having the inner ring structure 402 as a separate component to the rotor body 300 enables tuning of the centre of mass of the assembly via "clocking" (i.e. its relative rotational position with respect to other components) of the inner ring structure with respect to the rest of the components.

Figure 5e illustratively shows a zoomed in portion of the view of Figure 5d where the rotor body 300, magnets 401, support ring structure 405, and inner ring structure 402 with corrugations 406 are visible. In addition Figure 5e shows that the inner ring structure 402 does not contact or touch the surface of the magnets 401, but only the support ring structure 405 via the radial gap 409 that is filled with adhesive (not shown), as described previously.

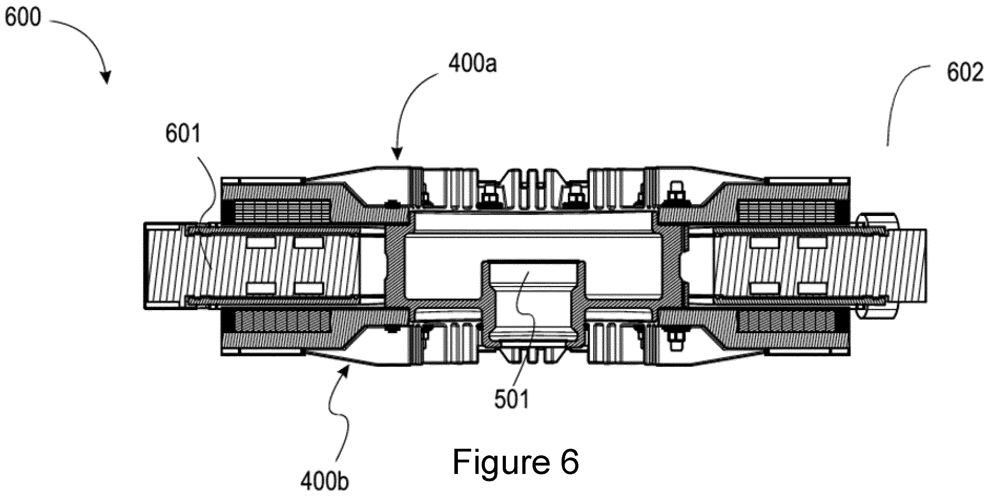

Figure 6 illustratively shows a cross-sectional view of an axial flux machine 600 according to the present disclosure.

The rotor assembly comprises two rotors 400a, 400b, for example of the type shown in Figures 5a-5e. As described above, the plurality of magnets 401 are arranged in a Halbach configuration, the compression ring structure 403, and a set of studs, k-nuts and inserts (e.g. compression limiters) as an alternative to nuts and bolts. It is envisaged that nuts and bolts may instead or additionally be used.

The rotor assembly further comprises a support hub/shaft 501, positioned in the opening of the assembled rotor 400a and attached to the rotors 400a, 400b typically using bolts. Whilst not visible in Figure 6, the inner ring structure 402 and rotor body 300 of the assembled rotor 400a is secured to the support hub 501, for example through bolt holes or other openings on the support hub 501.

Whilst figure 6 does not illustrate all of the possible components associated with an axial flux machine, the machine may also comprise an optional retention layer, balancing ring and castellated Rotor Position Sensor (RPS) target.

The retention layer, if provided, may be applied and bonded to the outer face of the Halbach array to reduce the risk that any magnet of the array detaches in an axial direction. However, the retention layer is not strictly required as the complete magnetic hoop of the Halbach magnet array combined with the compression force from the compression ring structure results in the magnets being secure enough within the array such it would require a significant amount of force (substantially more than the array would ever be subject to in operation) to push a single magnet wedge out of the array.

The retention layer is preferably a non-magnetic material to avoid "shorting" the magnetic flux from the magnets. However, it may be electrically conductive (e.g. aluminium) or non-conductive (e.g. glass fibre weave composite) as determined for maximum overall motor efficiency. Whilst non-conductive materials do not incur eddy current losses, conductive materials can function as eddy current shields to prevent or reduce the eddy current losses occurring within the body of the Halbach array. Having these losses occur principally within a conductive retention layer rather than within the Halbach array may be preferable due to reduced overall loss magnitude and/or improved heat transfer from the rotor into the surrounding air and/or enabling reduced segmentation of the Halbach array, reducing its manufacturing complexity.

The balancing ring, if provided, further helps to position the centre of mass of the rotor assembly during calibration (although is not strictly required given that the rotor of the present disclosure is able to achieve centre of mass calibration on its own by adjustment of the first ring structure relative to the rotor body). The balancing ring may accordingly adjust rotor balance to prevent out-of-balance vibration when rotating at high speeds. Alternatively, the balancing ring may be replaced with resin filler when the rotor assembly is built into an axial flux machine. Specifically, the undesirable vibrations may be adjusted by the mass balancing resin, however rotor and wider machine resonances may lead to excessive and perhaps destructive vibrations, particularly if the machine's normal operating point lies close to a resonant driving frequency. Usually, effort is given in design stages to avoid resonant modes sitting at normal operating points for the machine, particularly the natural or 1^{st} resonance mode. Often there are several resonances of higher modes that may be excited, and it is difficult to design around them all, and in this case such troublesome resonance modes are shifted to operating points away from normal running, but which nevertheless may be traversed during operation. The task then is to traverse resonant nodes quickly so as not excite excessive / troublesome vibrations.

The RPS target may provide a castellated metallic structure (typically a high conductivity material such as copper or aluminium) that rotates with the rotor, passing a static sensor mounted on the motor casing which determines the exact rotor angular position. Such sensors are widely used for rotor position sensing and typically produce a sinusoidal output after some noise filtering. Such sensors provide motor controllers with rotor position information for motor control. The RPS target may be attached using e.g. adhesive and/or fasteners to the second face of the rotor body 300, for example to an area without ribs i.e. clean back face. Alternatively, the RPS target may be overmoulded into the rotor body if the latter if formed from a suitable material e.g. polymer.

The rotor assembly of Figure 6 is set up for an H-configuration axial flux machine, however it is envisaged that a similar assembly with only a single rotor may be used where the rotor assembly 500 is intended for use with an I-configuration axial flux machine. Other configurations with other numbers of rotors and stators (for example arranged in a stack) are also envisaged.

Whilst not shown in Figures 5a-5e or Figure 6, it is envisaged that the rotor body 300 may define one or more further openings therethrough which are provided in addition to the central, axial opening through the axis of rotation of the rotor body 300. The purpose of such further openings is two-fold. Firstly, they further lightweight the rotor body 300. Secondly, and particularly advantageously, they expose the magnets to the surrounding air to help cool them. The inventors have found that this cooling effect is especially effective where the rotor body is SMC. This is because rotor bodies are traditionally metal, which are thermally highly conductive and are accordingly very good at providing a thermal pathway to draw excess heat away from the magnets. In contrast, SMC is not a good thermal conductor and the inventors found that this can in some cases result in undesirable heat build-up in the magnets. Providing openings in the rotor body 300 solves this problem as it partially exposes magnet surfaces to airflow where they would have been exposed in traditional rotors. This airflow helps to cool the magnets. The further openings may optionally be shaped so as to draw air into the openings as the rotor rotates, for example shaped with angled walls through the rotor body, for example angled towards the direction of rotation of the rotor so that the angled wall surfaces draw air into the opening as they rotate. It is envisaged that the further openings may be provided between the ribs 304 of the rotor body 300.

Further, the ribs 304 on the surface of the rotor body 300 not only serve to provide structural strength, but may also generate turbulence to encourage airflow into the further openings. Indeed, the ribs 304 may optionally be shaped, e.g. with one or more angled surfaces, to draw air towards the further openings as the rotor rotates to further assist in providing a cooling effect.

The rotors 400a, 400b, stator 601 and support hub 501 are enclosed within a housing 602 which may be provided with an opening (not shown) or other mechanism to transfer rotation of the rotors along a power train into rotation of a propeller or other movement mechanism of an aircraft or other flying vehicle.

Broadly speaking, the method of manufacturing or assembling the rotor comprises providing the disc-shaped rotor body 300 as described above, providing a magnetic sub-assembly 410 as described above; bonding the inner ring structure 402 to the support ring structure 405 of the magnetic sub-assembly 410; and bonding the magnetic sub-assembly 410 to the first face 313 of the rotor body 300.

By providing the magnetic sub-assembly 410 as a single unit, this enables the sub-assembly to be manufactured at the same time, or at a different time, to the rotor.

The bonding between the magnetic sub-assembly 410 and inner ring structure 402 may be provided by an adhesive such as epoxy resin. The choice of adhesive may be determined by desired performance with regards to heat or stress, so other adhesives may be used.

Similarly, the bonding between the magnetic sub-assembly 410 and the rotor body 300 may be provided by an adhesive such as epoxy resin. The choice of adhesive may be determined by desired performance with regards to heat or stress, so other adhesives may be used.

With regards to the magnetic sub-assembly 410, the manufacturing or assembling may comprise: arranging a plurality of permanent magnets 401 in a Halbach array configuration arranged circumferentially around an axis; bonding the support ring structure 405 to the radially inner surface of the plurality of permanent magnets 401; and applying the compression ring structure 403 to the radially outward surface of the plurality of permanent magnets 401.

Arranging the plurality of permanent magnets 401 may be done using a jig to maintain the correct form of the combined magnetic structure and the orientation of the permanent magnets 401 that form the Halbach array. As discussed above, the form and arrangement of the magnets that form the Halbach array may be different for different rotors. The present invention is not limited to the specific arrangement of magnetic segments illustrated in the appended figures.

Once arranged, the plurality of permanent magnets 401 are bonded in the Halbach array configuration, using for example an adhesive bond.

The support ring structure 405 is bonded to the radially inner surface of the plurality of permanent magnets by arranging the support ring structure radially inwardly of the plurality of permanent magnets and applying an adhesive bond between the support ring structure and the radially inward surface of the plurality of permanent magnets (for example by filling of the gap between the support ring structure and the permanent magnets). Using such an arrangement advantageously means that manufacturing tolerances of the support ring structure and the magnetic pieces can be accommodated.

As described above, the support ring structure 405 is formed of a poorly electrically conducting and non-magnetic metal or alloy or ceramic. For example, the metal may be titanium or a titanium alloy.

The compression ring structure 403 is a pre-stretched ring structure that provides a compressive force to the radially outer surface of the permanent magnets. The step of applying the compression ring structure 403 therefore may comprise pre-stretching the compression ring structure 403 prior to applying the compression ring structure to the radially outward surface of the plurality of permanent magnets. Once installed, the compression ring structure 403 applies a compressive force to the radially outer surface of the permanent magnets 401.

Applying the compression ring structure 403 to the combination of the permanent magnets 401 and support ring structure 405 before bonding the magnetic sub-assembly 410 to the rotor body 300 results in reduced stressing of the adhesive bond between the magnetic sub-assembly 410 and the rotor body 300. Conversely, if the permanent magnets 401 and support ring structure 405 are bonded to the rotor body 300 before the compressing ring structure 403 is applied, then compressive forces applied by the compression ring structure will put the bond between the permanent magnets and rotor body into shear, which is undesirable. Additionally, the asymmetrical geometry of such an assembly prior to application of the compression ring may also result in undesirable warping/axial deflection of the rotor when the compression ring is applied.

As discussed above, the compression ring structure may be formed of a fibre reinforced composite material.

As discussed above, when the inner ring structure 402 is a separate structure to the rotor body 300, the inner ring structure 402 may be mounted to the first face 313 of the rotor body 300 in one of a plurality of positions relative to the first face of the rotor body, and is configured to be moveable to another of the plurality of positions to control a centre of mass of the rotor. The inner ring structure 402 may be mounted to the first face 313 of the rotor body 300 in said one of a plurality of positions with one or more of: studs, spacers, nuts, and bolts.

However, in alternative embodiments, the inner ring structure 402 may instead be formed as part of the rotor body 300 itself.

As discussed above, the rotor body 300 may be formed of a non-metallic and non-magnetic material. The rotor body 300 may, for example, be formed of a fibre composite material, Sheet Moulding Compound (SMC), engineering-grade polymer, Polyetheretherketone (PEEK) polymer, or ceramic.

The terms upper and lower, radial, axial, and the horizontal and vertical directions as used herein are used to describe the relative positioning of said surfaces and directions relative to each other and are not intended to limit the present disclosure to any given orientation in a coordinate system. The terms upper and lower, and horizontal and vertical are used for convenience of illustration relative to the figures provided herein. Thus, the upper surface is on an opposite side of a feature to the lower surface. Similarly, the inner surface is on an opposite of a feature to the outer surface regardless of the orientation of the feature in the coordinate system.

No doubt many other effective alternatives will occur to the skilled person. It will be understood that the invention is not limited to the described embodiments and encompasses modifications apparent to those skilled in the art lying within the scope of the claims appended hereto.

## Claims

**1.** A rotor for an axial flux machine, the rotor comprising:
a disc-shaped rotor body having an axis of rotation, and a first face extending perpendicular to the axis of rotation, the first face having an opening at the axis of rotation;
a magnetic sub-assembly bonded to the first face of the disc-shaped rotor body, the magnetic sub-assembly comprising:
a plurality of permanent magnets disposed circumferentially around the axis of rotation, the plurality of permanent magnets arranged in a Halbach array configuration;
a compression ring structure configured to compress a radially outward surface of the plurality of permanent magnets; and
a support ring structure bonded to a radially inner surface of the plurality of permanent magnets, the support ring structure being configured to react the compressive force of the compression ring; and
an inner ring structure bonded to the support ring structure.

**2.** The rotor according to claim 1, wherein the support ring structure has a profile that is symmetric about a plane that is perpendicular to the axis of rotation of the rotor body.

**3.** The rotor according to claim 1 or 2, wherein the support ring structure is formed of a poorly electrically conducting and non-magnetic metal or alloy or ceramic, optionally wherein the metal is titanium or a titanium alloy.

**5.** The rotor according to any preceding claim, wherein the support ring structure is bonded to the inner axial surface of the plurality of magnets with an adhesive bond layer.

**6.** The rotor according to any preceding claim, wherein the compression ring structure is formed of a fibre reinforced composite material, and/or wherein the compression ring structure is a pre-stretched ring structure that provides a compressive force to the radially outer surface of the permanent magnets.

**7.** The rotor according to any preceding claim, wherein a surface of the inner ring structure is provided with a plurality of corrugation structures.

**8.** The rotor according to any preceding claim, wherein the magnetic sub-assembly is mounted to the first face of the rotor body by an adhesive bond.

**9.** An axial flux machine, comprising:
a stator comprising a plurality of stator bars disposed circumferentially at intervals around an axis of the axial flux machine, each of the stator bars having a set of windings wound therearound to form a stator coil stack for generating a magnetic field generally parallel to the axis of the axial flux machine, the plurality of stator coil stacks being arranged to provide a hollow region at the centre of the axis of the axial flux machine; and
a rotor according to any preceding claim, the rotor being spaced apart from the stator along the axis of the machine to define a gap between the stator and rotor, optionally
wherein the axial flux machine comprises:
a second rotor according to any one of claims 1 to 14, the second rotor on a side of the stator opposing the side of the first rotor, and the second rotor being spaced apart from the stator along the axis of the machine to define a bap between the stator and rotor.

**10.** A method of assembling a rotor of an axial flux machine, the method comprising:
providing a disc-shaped rotor body, the rotor body having an axis of rotation, and a first face extending perpendicular to the axis of rotation, the first face having an opening at the axis of rotation;
providing a magnetic sub-assembly, the magnetic sub-assembly comprising:
a plurality of permanent magnets disposed circumferentially around the axis of rotation, the plurality of permanent magnets arranged in a Halbach array configuration;
a compression ring structure arranged radially outward of the plurality of permanent magnets and configured to compress a radially outward surface of the plurality of permanent magnets; and
a support ring structure arranged radially inwardly of the plurality of permanent magnets, the support ring structure being configured to react the compressive force of the compression ring;
bonding an inner ring structure to the support ring structure of the magnetic sub-assembly; and
bonding the magnetic sub-assembly to the first face of the rotor body

**11.** The method of claim 10, wherein providing a magnetic sub-assembly comprises:
arranging a plurality of permanent magnets in a Halbach array configuration arranged circumferentially around an axis;
bonding the support ring structure to the radially inner surface of the plurality of permanent magnets; and
applying the compression ring structure to the radially outward surface of the plurality of permanent magnets.

**12.** The method according to claim 11, wherein arranging a plurality of permanent magnets comprises arranging the plurality of permanent magnets in a jig, and./or wherein arranging a plurality of permanent magnets comprises bonding the permanent magnets in the Halbach array configuration, and/or
wherein bonding the support ring structure to the radially inner surface of the plurality of permanent magnets comprises arranging the support ring structure radially inwardly of the plurality of permanent magnets and applying an adhesive bond between the support ring structure and the radially inward surface of the plurality of permanent magnets.

**13.** The method according to any one of claims 10 to 12, wherein the support ring structure is formed of a poorly electrically conducting and non-magnetic metal or alloy or ceramic, optionally
wherein the metal is titanium or a titanium alloy.

**14.** The method according to claim and one of claims 10 to 13, wherein the compression ring structure is a pre-stretched ring structure that provides a compressive force to the radially outer surface of the permanent magnets, and applying the compression ring structure comprises pre-stretching the compression ring structure prior to applying the compression ring structure to the radially outward surface of the plurality of permanent magnets, and/or
wherein the compression ring structure is formed of a fibre reinforced composite material.

**15.** The method according to any one of claims 10 to 14, wherein the magnetic sub-assembly is bonded to the first face of the rotor body by an adhesive bond.
